# FASCICULE DE BREVET EUROPEEN

(11) **EP 1 086 002 B1**
(45) Date de publication et mention de la délivrance du brevet: **26.01.2005**
(21) Numéro de dépôt: 99925085.5
(22) Date de dépôt: 15.06.1999
(51) Int. Cl.: B60R 16/02

(54) **DISPOSITIF DE TRANSMISSION AVEC CONNECTEUR TOURNANT**
ÜBERTRAGUNGSVORRICHTUNG MIT DREHSCHALTER
TRANSMISSION DEVICE WITH ROTARY CONNECTOR

(30) Priorité: 15.06.1998 FR 9807496
(43) Date de publication de la demande: 28.03.2001
(73) Titulaire: Axon'Cable S.A., 51210 Montmirail (FR)
(72) Inventeur: MORTIER, Christian, 51210 Montmirail (FR); HERMANT, Stéphane, 51210 Montmirail (FR)
(74) Mandataire: Cardy, Sophie
(86) Numéro de dépôt international: PCT/FR1999/001414
(87) Numéro de publication internationale: WO 1999/065735

(56) Documents cités:
- EP-A- 0 675 576
- DE-A- 4 236 279
- FR-A- 2 732 284
- "ELECTRICITE" REVUE TECHNIQUE AUTOMOBILE, vol. 46, no. 528, 1 juin 1991 (1991-06-01), pages XLVII-L, LIII - LIV, LVI, XP000231235
- MATHON J -C: "MULTIPLEXAGE POUR L'HABITACLE: OPTIMISATION NECESSAIRE POUR SATISFAIRE AUX CONTRAINTES DE COUT MULTIPLEXING FOR PASSENGER ROOM: A NECESSARY OPTIMIZATION IN ORDER TO MEET THE COST CONSTRAINTS" INGENIEURS DE L'AUTOMOBILE, no. 690, 1 juin 1994 (1994-06-01), pages 49-52, XP000456840
- WOLFF H W: "SETZT SICH DER KFZ-BUS CAN DURCH?" NTZ NACHRICHTENTECHNISCHE ZEITSCHRIFT, vol. 43, no. 11, 1 novembre 1990 (1990-11-01), pages 835-836, XP000171819

## Description

La présente invention concerne un dispositif permettant la transmission de signaux de contrôle/commande entre une première station reliée à un élément mobile en rotation autour d'un axe et une deuxième station statique, chaque station étant connectée à différents organes électriques de commande et/ou organes électriques récepteurs, à chaque organe électrique de commande étant associé au moins un organe récepteur susceptible d'être activé par le signal émis par ledit organe électrique de commande, ledit dispositif étant muni d'un connecteur tournant comprenant un boîtier formant logement, entre une première partie et une deuxième partie en regard, ladite première partie étant solidaire dudit élément mobile et mobile en rotation autour dudit axe par rapport à la deuxième partie, et un câble électrique unique flexible enroulé dans le boîtier, au moins en partie autour dudit axe, et présentant une première extrémité connectée à ladite première station et une deuxième extrémité connectée à ladite deuxième station, ledit câble étant plat et comportant une gaine et au moins deux conducteurs parallèlles.

De tels dispositifs sont par exemple utilisés dans le domaine automobile pour relier de façon électrique une partie électronique fixe par rapport au châssis à une partie électronique mobile embarquée dans le volant. Le volant présentant un degré de liberté d'environ deux tours dans chaque sens, il est nécessaire que le contacteur tournant présente une liberté de manoeuvre au moins aussi importante pour que la traversée filaire du volant n'entrave pas son mouvement.

Par exemple, FR 2 732 284 concerne un dispositif pour la commande de differentes fonctions dans un véhicule automobile comportant au moins un organe de commande 7 fixe par rapport au volant et relié à un contacteur tournant 11 dans lequel passe une liaison bifilaire 10.

Il existe déjà un certain nombre de connecteurs tournants à contact ohmique présentant un boîtier renfermant un câble plat très flexible spiralé, c'est-à-dire enroulé en forme de spirale autour de l'axe géométrique de la colonne de direction sur une vingtaine de tours. Dans ce cas, lorsque le volant et la partie du boîtier qui lui est solidaire tournent dans un premier sens, le tronçon de câble formant les spires extérieures se relâche, l'excédent de longueur étant compensé par un resserrement et un enroulement supplémentaire au niveau des spires intérieures de diamètre plus petit. Lorsque le volant tourne dans l'autre sens, le phénomène inverse se produit de sorte qu'une longueur de câble limitée permet une liberté de manoeuvre sur plusieurs tours. Le nombre de tours maximum est déterminé par le choix du diamètre intérieur et du diamètre extérieur du boîtier, de la longueur du câble et de l'épaisseur du câble.

Les systèmes électroniques et les différentes fonctions qu'ils commandent étant de plus en plus nombreux au sein des automobiles, il existe un besoin important pour fournir un module de commande placé au niveau du volant et permettant d'accéder à un nombre de fonctions relativement importantes, voire au-delà de vingt fonctions différentes.

Jusqu'à présent les connecteurs tournants proposés incorporaient un ou plusieurs câbles électriques superposés et enroulés sur eux-mêmes, les câbles incorporant un nombre total de conducteurs équivalent au nombre des organes électriques de commande, d'une part du côté volant, et approximativement au nombre d'organes électriques récepteurs, d'autre part du côté de l'habitacle ou du châssis automobile. Le signal électrique qui transite sur chacun de ces conducteurs étant relativement lent et quelconque, par exemple du type tout ou rien, le retard de transmission au niveau de la spirale (effet selfique) n'était pas trop dommageable à la qualité et à la bonne réception du signal reçu par l'organe de récepteur correspondant.

On comprend que l'agencement filaire qui vient d'être décrit présente, pour un encombrement donné, c'est-à-dire un volume intérieur du boîtier donné, un nombre limité de conducteurs que l'on atteint relativement rapidement. En outre, de par l'enroulement en spirale du câble, il semble impossible de faire passer des signaux numériques à haut débit, l'effet capacitif créé par l'enroulement allant perturber de façon trop importante le signal numérique pour que celui-ci soit correctement analysé par chacun des organes de commande ou récepteurs.

L'objet de la présente invention est de réaliser un contacteur tournant du type précité, présentant des dimensions admissibles par les constructeurs automobiles et permettant à la fois de résister aux contraintes mécaniques déformant le câble en flexion, à chaque enroulement et déroulement répétés, et de permettre la transmission rapide de signaux numériques de contrôle/commande entre une première station munie d'un module de commande et placée au niveau d'un élément mobile en rotation (le volant) et une deuxième station statique munie de différents organes électriques récepteurs (placés dans le châssis ou l'habitacle automobile), sans limitation du nombre d'organes électriques récepteurs pouvant être commandés par le module de commande.

Cet objectif est atteint selon la présente invention par un dispositif du type précité comportant les caractéristques de la partie caractérisante de la revendication 1.

On comprend que chacun des conducteurs de la paire de conducteurs transmet un signal complexe destiné à plusieurs organes électriques de commande et/ou organes électriques récepteur, ce signal complexe étant obtenu par exemple selon une technique de multiplexage des signaux élémentaires délivrés par chaque organe de contrôle/commande. En outre, l'utilisation d'un câble plat présentant des conducteurs parallèles entre eux permet de limiter considérablement l'encombrement du câble enroulé et, par voie de conséquence, l'encombrement du boîtier du contacteur tournant, sans pour autant réduire le nombre d'organes électriques commandés dont le nombre peut être illimité.

On constate en effet, de façon étonnante, que l'utilisation d'un câble plat flexible de faible épaisseur renfermant, à l'intérieur de la gaine, une paire de conducteurs parallèles adaptés en impédance caractéristique à la valeur nominale requise par la norme, n'entraîne pas une modification trop sensible des performances en transmission de la paire de conducteurs, du fait de l'enroulement du câble autour de la colonne de direction. Contrairement à l'effet selfique catastrophique attendu de l'enroulement, on constate que les performances en transmission de la ligne de transmission rapide de données numériques passant pas le câble, enroulé au niveau du connecteur tournant, sont très proches des performances de transmission obtenues en utilisant le même câble non-enroulé c'est-à-dire à plat : une atténuation très faible et des sur-oscillations relativement limitées.

La présente invention concerne également l'utilisation d'un dispositif de transmission tel qu'il vient d'être présenté dans un véhicule automobile, ladite deuxième station étant constituée d'un dispositif de harnais de multiplexage comprenant une ligne de transmission principale et au moins une ligne de transmission secondaire reliant ladite ligne principale à au moins un desdits organes électriques, ledit élément mobile étant un volant de direction solidaire d'une colonne de direction et ladite première station comprenant un module de commande muni d'au moins un commutateur électrique.

De façon générale, la présente invention se rapporte à l'utilisation d'un câble flexible plat conformément à la revendication 14.

L'invention sera mieux comprise et des caractéristiques secondaires et leurs avantages apparaîtront au cours de la description de modes de réalisation donnée ci-dessous à titre d'exemple.

Il est entendu que la description et les dessins ne sont donnés qu'à titre indicatif et non limitatif.

Il sera fait référence aux dessins annexés, dans lesquels :
- la figure 1 est un schéma de principe représentant un dispositif selon l'invention comprenant une première station, une deuxième station et un connecteur tournant ;
- la figure 2 représente de façon agrandie et en coupe transversale l'intérieur du connecteur tournant de la figure 1 ;
- la figure 3 est une vue analogue à celle de la figure 2 selon une variante de réalisation ;
- la figure 4 représente la section transversale d'un premier type de câble placé dans le connecteur tournant du dispositif selon la présente invention ;
- la figure 5 est analogue à la figure 4 pour un deuxième type de câble ;
- la figure 6 est une vue analogue à celle des figures 4 et 5 pour un troisième type de câble ; et.
- les figures 7 et 8 sont des courbes comparant les performances en transmission d'un câble plat et du même câble intégré dans le connecteur tournant du dispositif selon l'invention.

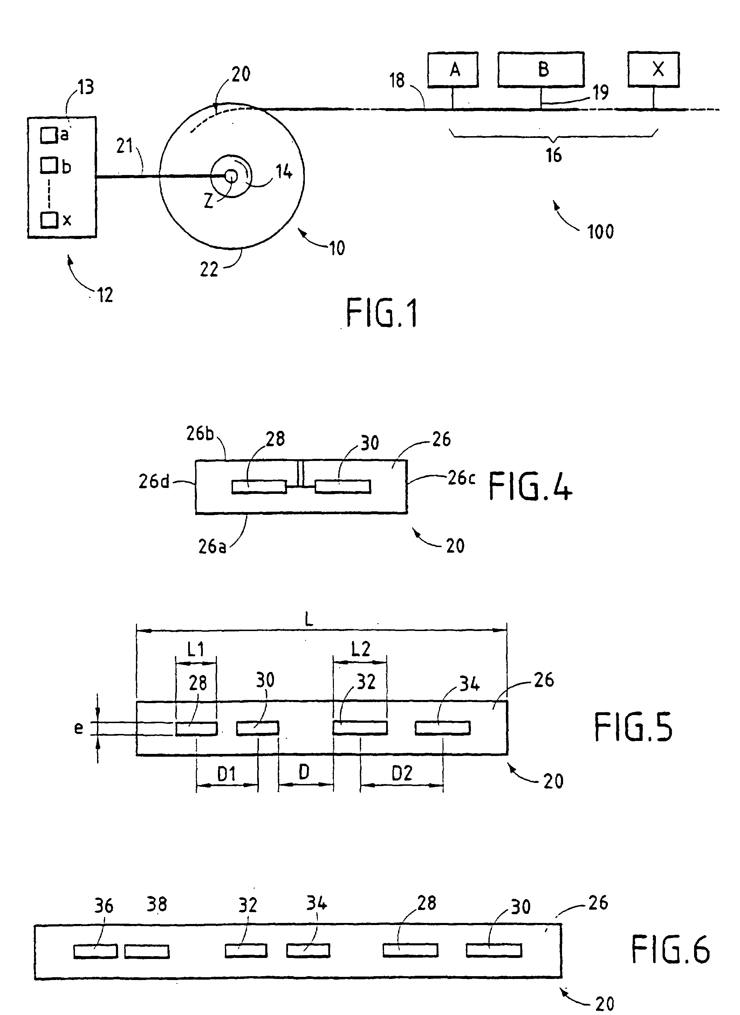

Si l'on se reporte à la figure 1, un connecteur tournant 10 est intégré à l'intérieur d'un dispositif 100 de transmission de signaux de contrôle/commande entre une première station 12 reliée mécaniquement de façon solidaire à un élément 14 mobile en rotation autour d'un axe Z, tel qu'un volant de direction d'un véhicule automobile et une deuxième station 16 statique. Cette deuxième station 16 comprend, par exemple, et de façon préférentielle, un dispositif de harnais s'étendant dans toutes les parties d'un véhicule automobile (habitacle, motorisation, freinage, éclairage, amortisseurs, pneumatiques...) et présentant une ligne de transmission principale 18, pour la transmission rapide de signaux de données numériques, obtenus par multiplexage, connectée à des lignes de transmission secondaires 19 aboutissant chacune à au moins un organe de commande ou un organe récepteur A, B, ...., X.

La première station 12 est composée, de façon préférentielle mais non exclusive, d'un module de commande 13 et d'une ligne de transmission 21. Le module de commande 13 comporte des circuits électroniques commandés par des interrupteurs, des commutateurs, des leviers de commande ou tout autre moyen équivalent. La ligne de transmission 21, permettant également de transférer des signaux de données numériques multiplexés, est située entre le module de commande 13 et le connecteur tournant 10.

La première station 12 est reliée électriquement à la deuxième station 16 par un câble 20 enroulé au niveau du connecteur tournant 10, à l'intérieur d'un boîtier 22, et dont les extrémités sont reliées aux lignes 18 et 21 constituées de câbles du même type que le câble 20.

De façon classique, par exemple notamment dans le cas du mode de transmission normalisé CAN, chacun des interrupteurs a, b, ..., x constitue un organe de commande destiné à activer l'un des organes récepteur A, B, ...., X. Néanmoins, on conçoit tout à fait que l'un des interrupteurs a, b, ..., x commande plusieurs organes récepteurs ou que plusieurs interrupteurs commandent le même organe récepteur. Ainsi par exemple, le commutateur a commande l'organe récepteur A correspondant au klaxon et le commutateur électrique b commande deux organes récepteur B1 et B2 correspondant respectivement aux feux antibrouillard avant et arrière.

De façon alternative, un des organes A, B, ..., X de la deuxième station 16 peut constituer un organe de contrôle émettant un signal en direction de la première station 12 qui active un des organes récepteurs a, b, ..., x. C'est par exemple le cas pour la commande de mise à feu d'un coussin gonflable de sécurité de type « airbag » : l'organe de commande est alors constitué de plusieurs capteurs piézo-électriques répartis au niveau de la carrosserie et l'organe récepteur situé au niveau du volant est constitué d'une électrode d'amorçage pouvant déclencher le gonflage du coussin de sécurité.

D'autres utilisations du dispositif de transmission selon la présente invention sont bien sûr également possibles que celles au niveau d'un volant d'un véhicule automobile, le dispositif peut être utilisé à chaque fois qu'il est nécessaire de transmettre rapidement des signaux numériques par un câble au niveau d'une liaison mécanique de type pivot.

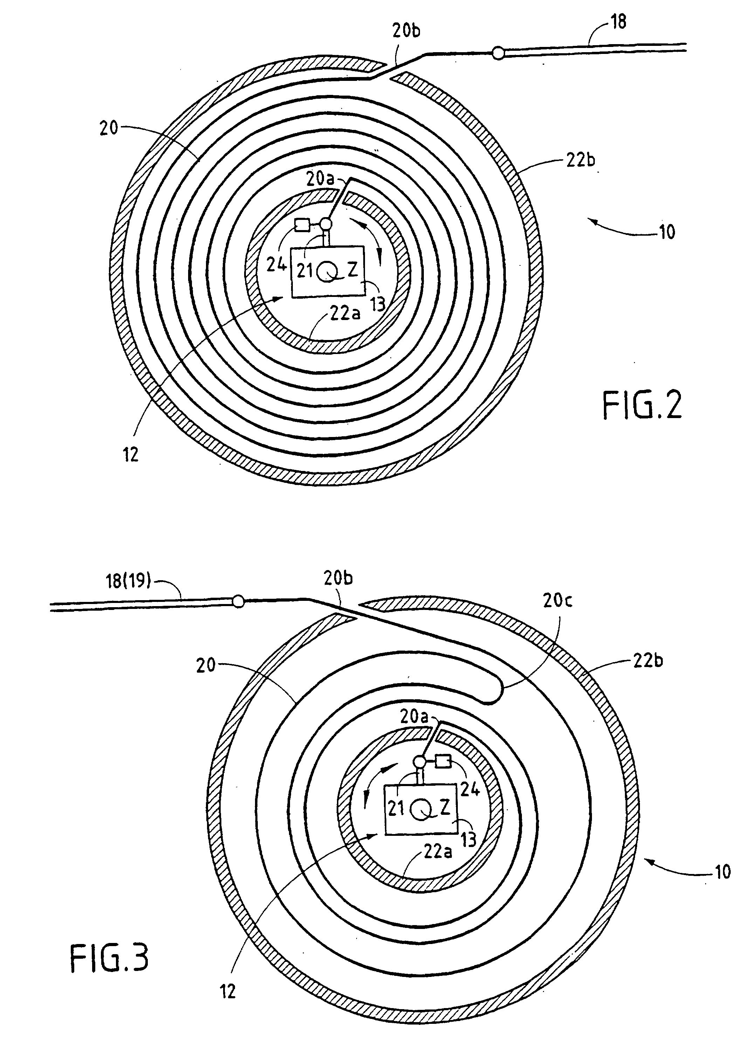

Le connecteur tournant 10 représenté sur la figure 2 comprend un boîtier 22 formant logement pour le câble 20 et comprenant une première partie 22a solidaire du volant et de la colonne de direction, c'est-à-dire mobile en rotation autour de l'axe Z, coopérant avec une deuxième partie 22b fixe dans l'habitacle automobile, coaxiale avec la première partie 22a et présentant, comme la première partie 22a, une géométrie circulaire.

Selon l'agencement de la figure 2, le câble 20 sort du boîtier 22, au niveau, d'une part, d'un premier tronçon 20a traversant la première partie 22a du boîtier en direction de la première station 12 et, d'autre part, d'un deuxième tronçon 20b traversant la paroi périphérique de la deuxième partie 22b du boîtier en direction de la deuxième station 16.

Le câble 20 est entièrement enroulé dans le même sens entre son premier tronçon 20a et son deuxième tronçon 20b en une spirale logée dans le boîtier 22. Cette spirale comporte au moins dix tours et présente une longueur d'enroulement au plus égale à cinq mètres. De façon préférentielle, le câble 20 est spiralé sur une longueur entre deux et trois mètres et comporte une vingtaine de tours.

On comprend que les constituants du câble 20 doivent permettre à celui-ci de résister à des déformations en flexion autour d'un axe parallèle à l'axe Z, ce nombre de flexion pouvant dépasser un million au cours de la durée de vie du connecteur tournant. Généralement, le diamètre extérieur du boîtier 22 varie entre 40 et 100 mm. Ainsi, on comprend que le câble 20 doit être suffisamment fin pour être contenu dans le boîtier 22 tout en laissant un espace libre suffisant à sa liberté de mouvement et doit être suffisamment flexible et résistant au niveau mécanique pour surmonter toute les manoeuvres successives d'enroulement et de déroulement, notamment au niveau des premier et deuxième tronçons 20a et 20b.

Comme il sera décrit ci-après, le choix des matériaux et la géométrie du câble 20 entraînent une impédance caractéristique constante tout le long du câble 20 pour au moins une paire de conducteurs du câble, cette impédance caractéristique étant égale à la valeur d'une impédance d'adaptation 24 connectée à l'extrémité libre du premier tronçon 20a du câble.

En effet, l'agencement en spirale du câble 20 (figure 2) entraînant une longueur de câble importante (de 2 à 3 mètres) le contacteur tournant est de préférence relié à l'extrémité de la ligne principale 18 (le branchement du connecteur tournant 10 au niveau d'une branche d'une ligne secondaire 19 pouvant entraîner trop de sur-oscillations).

La variante de réalisation illustrée à la figure 3 diffère de la figure 2 en ce que le câble 20 n'est plus enroulé selon une spirale unique car le câble 20 est enroulé en spirale à partir de son premier tronçon 20a, à proximité dudit axe Z, radialement vers l'extérieur du boîtier 22 dans un premier sens, le câble 20 changeant de sens d'enroulement jusqu'à son deuxième tronçon 20b sortant à la périphérie du boîtier 22. Sur la figure 3, le changement de sens d'enroulement du câble 20 s'effectue au niveau du tronçon 20c.

Cette variante de réalisation présentant une longueur de câble 20 plus réduite, elle peut être avantageusement utilisée pour placer le connecteur tournant 10 au niveau d'une ligne secondaire de transmission 19.

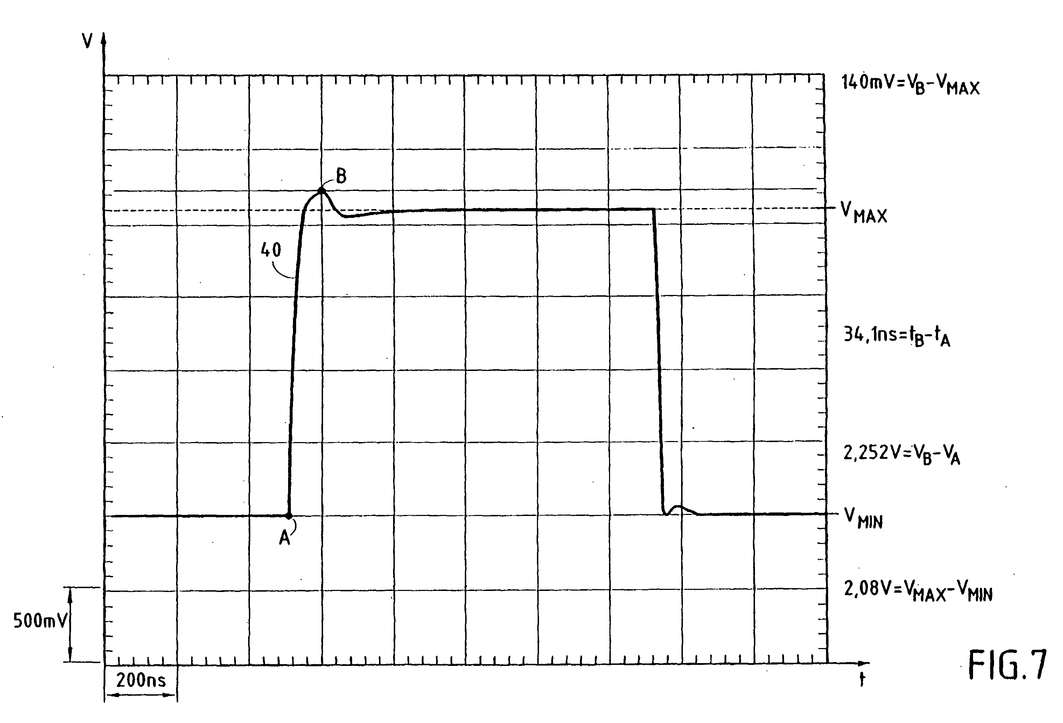

On se reportera maintenant aux figures 4 à 6 illustrant plusieurs types de câbles 20 pouvant être incorporés dans le contacteur tournant selon la présente invention. Il ressort des explications précédentes qu'un câble plat et flexible à conducteurs plats permettra mieux de remplir les contraintes d'encombrement et de déformation qu'un câble rond ou qu'un câble plat avec des conducteurs de section ronde.

Réduit à son plus strict minimum, le câble 20 (figure 4) présente une gaine 26, par exemple en polyester, et deux conducteurs 28, 30 en cuivre. Le câble 20 peut par exemple, être du type FFC (Flexible Flat Cable) dans lequel les deux conducteurs longitudinaux 28 et 30 sont intercalés entre les couches d'un matériau isolant formant la gaine 26, les couches pouvant être constituées par des plis longitudinaux autour des deux conducteurs 28 et 30, en une ou plusieurs épaisseurs, de repli d'au moins un ruban de matière sur lui-même en laissant, de préférence, une marge latérale réduite. D'autres types de câbles plats peuvent bien sûr être également utilisés.

Comme on peut le voir sur la figure 4, la gaine 26 est délimitée par deux surfaces longitudinales 26a et 26b, parallèles audit axe Z lorsque le câble est enroulé, et délimité par deux bords longitudinaux 26c, 26d formant chacun un chant du câble 20.

Pour répondre aux contraintes de flexibilité et d'encombrement, l'épaisseur du câble 20, c'est-à-dire la largeur du chant 26c ou 26d est au plus égal à 1 mm, de préférence, comprise entre 0,1 et 0,5 mm et de façon préférentielle sensiblement égale à 0,3 mm.

Les deux conducteurs 28 et 30 sont plats et présentent deux chants d'épaisseur constante et alignés, avec les chants 26c et 26d de la gaine, chaque conducteur étant séparé de l'autre desdits conducteurs d'une distance sensiblement constante tout le long du câble afin d'assurer une impédance caractéristique constante pour la paire de conducteurs 28, 30.

De préférence, l'impédance d'adaptation 24 et l'impédance caractéristique de la paire de conducteurs 28, 30 sont comprises entre 40 et 260 ohms, et de préférence entre 80 et 160 ohms. Il a été indiqué précédemment que l'impédance caractéristique de la paire de conducteurs 28, 30 est sensiblement égale à celle de l'impédance d'adaptation 24. En pratique, cette exigence est considérée comme remplie si l'écart est inférieur ou égal à 10 %.

De façon préférentielle, le chant de chaque conducteur présente une largeur, correspondant à l'épaisseur du conducteur, au plus égale à 0,3 mm, de préférence comprise entre 0,05 et 0,15 mm, et de façon préférentielle, sensiblement égale à 0,1 mm.

Dans ce premier type de câble, lés deux conducteurs 28 et 30 constituent ce que l'on appellera dans la suite de la description une ligne BUS, chacun des deux conducteurs transmettant, de façon rapide et dans un sens différent, un signal numérique complexe composé de signaux numériques élémentaires transmis en série, le signal numérique complexe pouvant être obtenu par multiplexage des signaux élémentaires.

De façon avantageuse, le débit de cette ligne BUS est supérieure à 100 kbits/s, de préférence supérieure à 125 kbits/s.

Selon un deuxième type de câble 20 représenté à la figure 5, outre les conducteurs 28 et 30, le câble 20 présente des conducteurs 32 et 34 destinés à l'alimentation en énergie électrique des première et deuxième stations 12 et 16. Dans ce cas, le câble 20 contient deux conducteurs 28 et 30 adaptés en impédance pour la transmission des signaux de données numériques et deux conducteurs 32 et 34 non adaptés en impédance pour l'alimentation électrique des stations 12 et 16.

La figure 6 présente un troisième type de câble 20 comprenant, outre les mêmes éléments que le câble 20 de la figure 5, au moins un conducteur supplémentaire pour la transmission d'un signal de commande/contrôle. Dans le cas du câble 20 du troisième type illustré à la figure 6, celui-ci contient deux conducteurs supplémentaires 36 et 38 transmettant un signal non forcément numérique, tel qu'un signal tout ou rien, et non forcément rapide, ces conducteurs n'étant pas adaptés en impédance. Ces deux conducteurs 36 et 38 peuvent, par exemple, correspondre à la commande d'un coussin gonflable de sécurité, si l'on souhaite séparer cette fonction de la ligne BUS formée par les conducteurs 28 et 30.

Les deux conducteurs supplémentaires 36 et 38 peuvent également constitués une ligne BUS supplémentaire destinée, par exemple. à la commande de l'ensemble des coussins de sécurité gonflable (airbag conducteur, passager, airbag latéraux, etc), l'autre ligne BUS (28, 30) étant par exemple destinée aux fonctions commandées depuis le volant (essuie-glaces, klaxon, lève-vitre, autoradio, régulateur de vitesse, ...).

Dans ce cas, la deuxième paire de conducteurs 36, 38 formant une deuxième ligne BUS est également adaptée en impédance, d'une part, par la géométrie de la portion du câble 20 englobant cette deuxième paire de conducteurs 36, 38 et, d'autre part, par la connexion de cette paire à une impédance d'adaptation à chaque bout de la ligne.

Un exemple de réalisation va maintenant être présenté afin de montrer que les caractéristiques physiques et électriques de transmission du câble 20 mis à plat hors du boîtier ou enroulé dans le boîtier sont très comparables.

Pour cet essai le câble utilisé est un câble du deuxième type (figure 5) présentant les caractéristiques suivantes (conducteurs 28, 30, 32 et 34 en cuivre et gaine 26 en polyester) :
- e = 0,14 mm
- L = 8 mm
- L1 = 0,8 mm
- L2 = 1,6 mm
- D = 1,4 mm
- D1 = 1,27 mm
- D2 = 2,54 mm

La courbe 40 de la figure 7 représente les performances en transmission de câble 20 mis à plat au travers du signal reçu (tension V en fonction du temps t), le signal en créneau émis simulant un débit correspondant au maximum de la norme CAN, à savoir 1Mbits/s, soit sur la courbe 40, un créneau s'étendant sur environ 1 µs.

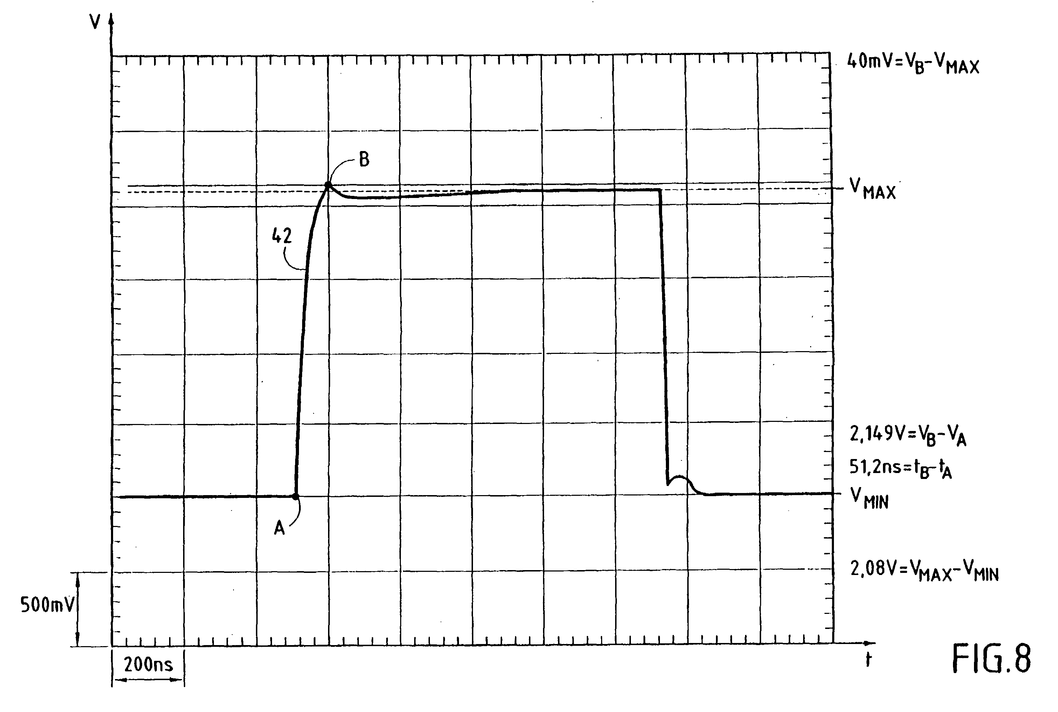

Si l'on se reporte maintenant à la figure 8, la courbe 42 correspond au signal reçu au niveau du deuxième tronçon 20b du câble 20, le signal émis étant envoyé au niveau du premier tronçon 20a du câble 20. Dans ce cas, entre les deux tronçons 20a et 20b, le câble 20 est enroulé sur environs 20 tours dans un boîtier 22 traversé par une barre métallique, simulant la colonne de direction, sur une longueur de 2,30 m, le diamètre d'enroulement moyen étant de 50 mm.

Sur les courbes 40 et 42, V_{MIN} correspond à la tension moyenne de la ligne basse du créneau (correspondant à un bit de valeur 0), V_{MAX} correspond à la tension moyenne de la ligne haute du créneau (correspondant à un bit de valeur 1), V_{B} et V_{A} correspondant respectivement à la tension de crête haute et basse pendant la montée.

En comparant les deux courbes 40 et 42, on s'aperçoit que la forme générale du créneau obtenu n'est pas sensiblement modifiée, le temps de montée augmentant pour passer de 34,1 ns à 51,2 ns, ce qui n'est pas préjudiciable compte-tenu de la valeur de la fréquence utilisée. On remarque également que l'enroulement engendre un effet filtrant puisque la courbe 42 présente un écart de tension au niveau de la crête haute (V_{B}-V_{MAX}) plus faible (40 mV contre 140 mV pour la courbe 40).

## Revendications

1. Dispositif (100) permettant la transmission de signaux de contrôle/commande entre une première station (12) reliée à un élément mobile (14) en rotation autour d'un axe (Z) et une deuxième station (16) statique, chaque station étant connectée à différents organes électriques de commande (a, b, ..., x) et/ou organes électriques récepteurs (A, B, ..., X), à chaque organe électrique de commande (a, b, ..., x) étant associé au moins un organe récepteur (A, B, ..., X) susceptible d'être activé par le signal émis par ledit organe électrique de commande, ledit dispositif (100) étant muni d'un connecteur tournant (10) comprenant un boîtier (22) formant logement, entre une première partie (22a) et une deuxième partie (22b) en regard, ladite première partie (22a) étant solidaire dudit élément mobile (14) et mobile en rotation autour dudit axe (Z) par rapport à la deuxième partie (22b), et un câble électrique (20) unique flexible enroulé dans le boîtier (22), au moins en partie autour dudit axe (Z), et présentant une première extrémité connectée à ladite première station (12) et une deuxième extrémité connectée à ladite deuxième station (16), ledit câble (20) étant plat et comportant une gaine (26) et au moins deux conducteurs (28, 30, 32, 34, 36, 38) parallèles, **caractérisé en ce qu'**au moins une desdites première et deuxième stations (12, 16) délivre, en direction de l'autre station, au moins un signal rapide de données numériques présentant un débit supérieur à 100 kbits/s, **en ce qu'**une paire (28, 30) au moins desdits conducteurs est reliée électriquement à une impédance d'adaptation (24), **en ce que** le nombre de conducteurs est inférieur au nombre d'organes de commande (a, b, ..., x) et le matériau et la géométrie de la gaine (26) et de ladite paire de conducteurs est choisis de sorte que ladite paire de conducteurs (28, 30) présente une impédance caractéristique constante sur toute la longueur du câble (20) et de valeur sensiblement égale à celle de ladite impédance d' adaptation (24) pour permettre la transmission rapide desdites données numériques, **en ce que** ladite gaine (26) est délimitée par deux surfaces (26a, 26b) sensiblement parallèles audit axe (Z) et délimitées par deux bords longitudinaux (26c, 26d) formant chacun un chant dudit câble (20), **en ce que** ledit chant présente une largeur, correspondant à l'épaisseur dudit câble (20), au plus égale à 1 mm, **en ce que** lesdits conducteurs (28, 30, 32, 34, 36, 38) sont plats et présentent deux chants d'épaisseur constante et alignés avec les chants de ladite gaine (26), **en ce que** chaque conducteur de ladite paire (28, 30) est séparé de l'autre conducteur de ladite paire d'une distance sensiblement constante tout le long dudit câble (20), et **en ce que** ledit chant de chaque conducteur présente une largeur, correspondant à l'épaisseur dudit conducteur, au plus égale à 0.3 mm.

2. Dispositif (100) selon la revendication 1, **caractérisé en ce que** ladite deuxième station (16) comprend un dispositif de harnais de multiplexage présentant une ligne de transmission principale (18) connectée à des lignes de transmission secondaires (19) aboutissant chacune à au moins un organe de commande (a, b, ..., x) ou un organe récepteur (A, B, ..., X).

3. Dispositif (100) selon la revendication 1 ou 2, **caractérisé en ce que** la largeur du chant du câble (20) est comprise entre 0.1 et 0.5 mm.

4. Dispositif (100) selon la revendication 1, 2 ou 3, **caractérisé en ce que** le largeur du chant de chaque conducteur est comprise entre 0.05 et 0.15 mm.

5. Dispositif (100) selon l'une quelconque des revendications précédentes, **caractérisé en ce que** ledit câble (20) contient une paire de conducteurs (28, 30) pour la transmission d'au moins un signal de données numériques et deux conducteurs (32, 34) pour l'alimentation électrique desdites stations (12, 16).

6. Dispositif (100) selon la revendication 5, **caractérisé en ce que** ledit câble (20) contient, en outre, au moins un conducteur supplémentaire (36, 38) pour la transmission d'un signal de commande/contrôle.

7. Dispositif (100) selon l'une quelconque des revendications précédentes, **caractérisé en ce que** ledit câble (20) sort dudit boîtier (22) au niveau, d'une part, d'un premier tronçon (20a) traversant la première partie (22a) du boîtier (22) en direction dudit élément mobile (14) et, d'autre part, d'un deuxième tronçon (20b) traversant la paroi périphérique de la deuxième partie (22b) du boîtier (22) en direction de la deuxième station (16).

8. Dispositif (100) selon l'une quelconque des revendications précédentes, **caractérisé en ce que** ledit câble (20) est entièrement enroulé en une spirale dans ledit boîtier (22) sur au moins dix tours et présente une longueur d'enroulement au plus égale à 5 mètres.

9. Dispositif (100) selon les revendications 2, 7 et 8, **caractérisé en ce que** ladite deuxième extrémité de câble du connecteur tournant (10) est raccordée à l'extrémité de la ligne principale (18) et **en ce que** l'impédance d'adaptation (24) est connectée à ladite première extrémité du câble (20).

10. Dispositif (100) selon la revendication 7, **caractérisé en ce que** ledit câble (20) est enroulé en spirale à partir de son premier tronçon (20a) depuis ledit axe (Z) radialement vers l'extérieur du boîtier (22) dans un premier sens, ledit câble (20) changeant de sens d'enroulement jusqu'à son deuxième tronçon (20b) sortant à la périphérie du boîtier.

11. Dispositif (100) selon les revendications 2 et 10, **caractérisé en ce que** ladite deuxième extrémité du câble (20) du connecteur tournant est raccordée à l'une des lignes secondaires (19).

12. Dispositif (100) selon l'une quelconque des revendications précédentes, **caractérisé en ce que** l'impédance d'adaptation (24) et l'impédance caractéristique de ladite paire de conducteurs (28, 30) sont comprises entre 40 et 260, et de préférence entre 80 et 160 ohms.

13. Utilisation d'un dispositif (100) selon l'une quelconque des revendications 1 à 12 dans un véhicule automobile, ladite deuxième station (16) étant constituée d'un dispositif de harnais de multiplexage comprenant une ligne de transmission principale (18) et au moins une ligne de transmission secondaire reliant ladite ligne principale (18) à au moins un desdits organes électriques, ledit élément mobile (14) étant un volant de direction solidaire d'une colonne de direction et ladite première station (12) comprenant un module de commande muni d'au moins un commutateur électrique.

14. Utilisation d'un câble (20) flexible plat présentant une gaine (26) et au moins deux conducteurs (28, 30, 32, 34, 36, 38) dont au moins une paire (28, 30) de conducteurs parallèles adaptée en impédance caractéristique, dans un dispositif (100) permettant la transmission de signaux de contrôle/commande entre une première station (12) reliée à un élément mobile (14) en rotation autour d'un axe (Z) et une deuxième station (16) statique, chaque station (12, 16) étant connectée à différents organes électriques de commande (a, b, ..., x) et/ou organes électriques récepteurs (A, B, ..., X), à chaque organe électrique de commande étant associé au moins un organe récepteur susceptible d'être activé par le signal émis par ledit organe électrique de commande, caracteriseé en ce que chacune desdites première et deuxième stations (12, 16) délivre, en direction de l'autre station, au moins un signal rapide de données numériques présentant un débit supérieur à 100 kbits/s, en ce que ledit dispositif (100) présente un connecteur tournant (10) muni d'un câble (20) enroulé dans le boîtier, au moins en partie autour dudit axe (Z), et présente une première extrémité connectée à ladite première station (12) et une deuxième extrémité connectée à ladite deuxième station (16) afin d'assurer la transmission de signaux entre chaque organe de commande et ledit organe récepteur correspondant, en ce que le nombre de conducteurs est inférieur au nombre d'organes de commande (a, b, ..., x) et le matériau et la géométrie de la gaine (26) et de ladite paire de conducteurs (20, 30) est choisis de sorte que ladite paire de conducteurs (20, 30) présente une impédance caractéristique constante sur toute la longueur du câble (20) et de valeur sensiblement égale à celle de ladite impédance d'adaptation (24) pour permettre la transmission rapide desdites données numériques, en ce que ladite gaine (26) est délimitée par deux surfaces (26a, 26b) sensiblement parallèles audit axe (Z) et délimitées par deux bords longitudinaux (26c, 26d) formant chacun un chant dudit câble (20), en ce que ledit chant présente une largeur, correspondant à l'épaisseur dudit câble (20), au plus égale à 1 mm, en ce que lesdits conducteurs (28, 30, 32, 34, 36, 38) sont plats et présentent deux chants d'épaisseur constante et alignés avec les chants de ladite gaine (26), en ce que chaque conducteur de ladite paire (28, 30) est séparé de l'autre conducteur de ladite paire d'une distance sensiblement constante tout le long dudit câble (20), et en ce que ledit chant de chaque conducteur présente une largeur, correspondant à l'épaisseur dudit conducteur, au plus égale à 0.3 mm.

## Claims

1. Device (100) allowing the transmission of control signals between a first station (12) connected to a mobile element (14) rotating about an axis (Z) and a second static station (16), each station being connected to different electrical control organs (a, b, ..., x) and/or electrical reception organs (A, B, ..., X), with each electrical control organ (a, b, ..., x) being associated at least one reception organ (A, B, ..., X) able to be activated by the signal emitted by the said electrical control organ, the said device (100) being provided with a rotating connector (10) comprising a case (22) forming a housing, between a facing first part (22a) and second part (22b), the said first part (22a) being rigidly attached to the said mobile element (14) and mobile in rotation about the said axis (Z) relative to the second part (22b), and a single flexible electrical cable (20) wound in the case (22), at least partially around the said axis (Z), and presenting a first end connected to the said first station (12) and a second end connected to the said second station (16), the said cable (20) being flat and including a sheath (26) and at least two parallel conductors (28, 30, 32, 34, 36, 38), **characterised by** the fact that at least one of the said first and second stations (12, 16) delivers, to the other station, at least one rapid digital data signal having a bit-rate higher than 100 kbits/s, by the fact that at least a pair (28, 30) of the said conductors is electrically connected to a matching impedance (24), by the fact that the number of conductors is less than the number of control organs (a, b, ..., x) and the material and geometry of the sheath (26) and of the said pair of conductors is so selected that the said pair of conductors (28, 30) has a uniform characteristic impedance over the whole length of the cable (20) and a value substantially equal to that of the said matching impedance (24) to allow rapid transmission of the said digital data, by the fact that the said sheath (26) is defined by two surfaces (26a, 26b) substantially parallel with the said axis (Z) and defined by two longitudinal edges (26c, 26d) each forming an edge surface of the said cable (20), by the fact that the said edge surface has a width corresponding to the thickness of the said cable (20), at most equal to 1 mm, by the fact that the said conductors (28, 30, 32, 34, 36, 38) are flat and have two edge surfaces of uniform thickness and aligned with the edge surfaces of the said sheath (26), by the fact that each conductor of the said pair (28, 30) is separated from the other conductor of the said pair by a substantially uniform distance along the whole length of the said cable (20), and by the fact that the said edge surface of each conductor has a width, corresponding to the thickness of the said conductor, at most equal to 0.3 mm.

2. Device (100) as described in claim 1, **characterised by** the fact that the said second station (16) comprises a multiplexing harness device having a main transmission line (18) connected to secondary transmission lines (19) each running to at least one control organ (a, b, ..., x) or a reception organ (A, B, ..., X) .

3. Device (100) as described in claim 1 or 2, **characterised by** the fact that the width of the edge surface of the cable (20) is between 0.1 and 0.5 mm.

4. Device (100) as described in claim 1, 2, or 3, **characterised by** the fact that the width of the edge surface of each conductor is between 0.05 and 0.15 mm.

5. Device (100) as described in any one of the preceding claims, **characterised by** the fact that the said cable (20) contains a pair of conductors (28, 30) for the transmission of at least one digital data signal and two conductors (32, 34) for the electrical power supply of the said stations (12, 16).

6. Device (100) as described in claim 5, **characterised by** the fact that the said cable (20) also contains at least one additional conductor (36, 38) for the transmission of a control signal.

7. Device (100) as described in any one of the preceding claims, **characterised by** the fact that the said cable (20) leaves the said case (22) at the level, on the one hand, of a first section (20a) passing through the first part (22a) of the case (22) towards the said mobile element (14) and, on the other, of a second section (20b) passing through the peripheral wall of the second part (22b) of the case (22) towards the second station (16).

8. Device (100) as described in any one of the preceding claims, **characterised by** the fact that the said cable (20) is entirely wound in a spiral inside the said case (22) through at least ten turns and has a winding length at most equal to 5 metres.

9. Device (100) as described in claims 2, 7 and 8, **characterised by** the fact that the said second cable end of the rotating connector (10) is connected to the end of the main line (18) and by the fact that the matching impedance (24) is connected to the said first end of the cable (20).

10. Device (100) as described in claim 7, **characterised by** the fact that the said cable (20) is wound in a spiral from its first section (20a) from the said axis (Z) radially towards the outside of the case (22) in a first direction, the said cable (20) changing winding direction up to its second section (20b) leaving at the periphery of the case.

11. Device (100) as described in claims 2 and 10, **characterised by** the fact that the said second end of the cable (20) of the rotating connector is connected to one of the secondary lines (19).

12. Device (100) as described in any one of the preceding claims, **characterised by** the fact that the matching impedance (24) and the characteristic impedance of the said pair of conductors (28, 30) are between 40 and 260, and preferably between 80 and 160 ohms.

13. Use of a device (100) as described in any one of claims 1 to 12 in a motor vehicle, the said second station (16) consisting of a multiplexing harness device comprising a main transmission line (18) and at least one secondary transmission line connecting the said main line (18) to at least one of the said electrical organs, the said mobile element (14) being a steering wheel rigidly attached to a steering column and the said first station (12) comprising a control unit provided with at least one electrical switch.

14. Use of a flat flexible cable (20) having a sheath (26) and at least two conductors (28, 30, 32, 34, 36, 38) including at least one pair (28, 30) of parallel conductors matched in characteristic impedance, in a device (100) allowing the transmission of control signals between a first station (12) connected to a mobile element (14) rotating about an axis (Z) and a second static station (16), each station (12, 16) being connected to different electrical control organs (a, b, ..., x) and/or electrical reception organs (A, B, ..., X), with each electrical control organ being associated at least one reception organ able to be activated by the signal emitted by the said electrical control organ, **characterised by** the fact that each of the said first and second stations (12, 16) delivers, to the other station, at least one rapid digital data signal having a bit-rate higher than 100 kbits/s, by the fact that the said device (100) has a rotating connector (10) provided with a cable (20) wound in the case, at least partially around the said axis (Z), and has a first end connected to the said first station (12) and a second end connected to the said second station (16) in order to provide transmission of signals between each control organ and the said corresponding reception organ, by the fact that the number of conductors is less than the number of control organs (a, b, ..., x) and the material and geometry of the sheath (26) and of the said pair of conductors (20, 30) is so selected that the said pair of conductors (20, 30) has a uniform characteristic impedance along the whole length of the cable (20) and a value substantially equal to that of the said matching impedance (24) to permit rapid transmission of the said digital data, by the fact that the said sheath (26) is defined by two surfaces (26a, 26b) substantially parallel with the said axis (Z) and defined by two longitudinal edges (26c, 26d) each forming an edge surface of the said cable (20), by the fact that the said edge surface has a width corresponding to the thickness of the said cable (20), at most equal to 1 mm, by the fact that the said conductors (28, 30, 32, 34, 36, 38) are flat and have two edge surfaces of uniform thickness and aligned with the edge surfaces of the said sheath (26), by the fact that each conductor of the said pair (28, 30) is separated from the other conductor of the said pair by a substantially uniform distance along the whole length of the said cable (20), and by the fact that the said edge surface of each conductor has a width, corresponding to the thickness of the said conductor, at most equal to 0.3 mm.

## Patentansprüche

1. Vorrichtung (100) , die die Übertragung von Kontroll-/Steuerungssignalen zwischen einer ersten Station (12), die mit einem hinsichtlich Rotation um eine Achse (Z) beweglichen Element (14) verbunden ist, und einer zweiten, statischen Station (16) möglich macht, wobei jede Station mit verschiedenen elektrischen Steuerungselementen (a, b, ..., x) und/oder elektrischen Empfängerelementen (A, B, ..., X) verbunden ist, wobei jedes elektrische Steuerungselement (a, b, ..., x) mit wenigstens einem Empfängerelement (A, B, ...X) verbunden ist, das geeignet ist, durch das von dem elektrischen Steuerungselement abgegebene Signal aktiviert zu werden, wobei die Vorrichtung (100) mit einem Drehverbinder (10), der ein eine Aufnahme bildendes Gehäuse (22) zwischen einem ersten Teil (22a) und einem gegenüberliegenden zweiten Teil (22b) aufweist, wobei das erste Teil (22a) mit dem beweglichen Element (14) verbunden ist und hinsichtlich Rotation um die Achse (Z) bezüglich dem zweiten Teil (22b) beweglich ist, und einem einzigen elastischen elektrischen Kabel (20) ausgestattet ist, das in dem Gehäuse (22) aufgerollt ist, wenigstens teilweise um die Achse (Z), und ein erstes, mit der ersten Station (12) verbundenes Ende und ein zweites, mit der zweiten Station (16) verbundenes Ende aufweist, wobei das Kabel (20) flach ist und eine Hülle (26) und wenigstens zwei parallele Leiter (28, 30, 32, 34, 36, 38) aufweist,
**dadurch gekennzeichnet, dass** wenigstens eine der ersten und zweiten Station (12, 16) in Richtung der anderen Station wenigstens ein schnelles Signal von numerischen Daten mit einem Volumen größer als 100 kbit/s liefert, dass ein Paar (28, 30) wenigstens der genannten Leiter elektrisch mit einer Anpassungsimpedanz (24) verbunden ist, dass die Anzahl von Leitern kleiner ist als die Anzahl von Steuerungselementen (a, b, ...,x) und das Material und die Geometrie der Hülle (26) und des Leiterpaares so ausgewählt ist, dass das Leiterpaar (28, 30) eine konstante charakteristische Impedanz auf der gesamten Länge des Kabels (20) und von einem Wert im Wesentlichen gleich demjenigen der Anpassungsimpedanz (24) aufweist, um die schnelle Übertragung der numerischen Daten zu ermöglichen,
dass die Hülle (26) durch zwei Flächen (26a, 26b) begrenzt ist, die im Wesentlichen parallel zur Achse (Z) verlaufen und durch zwei Längsränder (26c, 26d) begrenzt sind, die jeweils eine Schmalseite des Kabels (20) bilden, und dass die Schmalseite eine Breite aufweist, die der Dicke des Kabels (20), höchstens gleich 1 mm, entspricht,
dass die Leiter (28, 30, 32, 34, 36, 38) flach sind und zwei Schmalseiten mit einer konstanten Dicke aufweisen und mit den Schmalseiten der Hülle (26) ausgerichtet sind, und dass jeder Leiter des Paars (28, 30) vom anderen Leiter des Paars in einem im Wesentlichen auf der gesamten Länge des Kabels (20) konstanten Abstand getrennt ist,
und dass die Schmalseite jedes Leiters eine Breite aufweist, die der Dicke des Leiters, höchstens gleich 0,3 mm, entspricht.

2. Vorrichtung (100) nach Anspruch 1, **dadurch gekennzeichnet, dass** die zweite Station (16) einen Multiplexkabelbaum aufweist, der eine Hauptübertragungsleitung (18) aufweist, die mit sekundären Übertragungsleitungen (19) verbunden ist, die jeweils an wenigstens einem Steuerungselement (a, b, ...,x) oder einem Empfängerelement (a; B, ...,X) enden.

3. Vorrichtung (100) nach Anspruch 1 oder 2, **dadurch gekennzeichnet, dass** die Breite der Schmalseite des Kabels (20) zwischen 0,1 und 0,5 mm, beide Werte eingeschlossen, beträgt.

4. Vorrichtung (100) nach Anspruch 1, 2 oder 3, **dadurch gekennzeichnet, dass** die Breite der Schmalseite jedes Leiters zwischen 0,05 und 0,15 mm beträgt, beide Werte eingeschlossen.

5. Vorrichtung (100) nach einem der vorhergehenden Ansprüche, **dadurch gekennzeichnet, dass** das Kabel (20) ein Paar von Leitern (28, 30) zur Übertragung von wenigstens einem Signal von numerischen Daten und zwei Leiter (32, 34) zur elektrischen Speisung der Stationen (12, 16) enthält.

6. Vorrichtung (100) nach Anspruch 5, **dadurch gekennzeichnet, dass** das Kabel (20) außerdem wenigstens einen zusätzlichen Leiter (36, 38) zur Übertragung eines Steuerungs-/Kontrollsignals enthält.

7. Vorrichtung (100) nach einem der vorhergehenden Ansprüche, **dadurch gekennzeichnet, dass** das Kabel (20) aus dem Gehäuse (22) austritt auf Höhe einerseits eines ersten Abschnitts (20a), der das erste Teil (22a) des Gehäuses (22) in Richtung des beweglichen Elements (14) durchquert, und andererseits eines zweiten Abschnitts (20b), der die Umfangswand des zweiten Teils (22b) des Gehäuses (22) in Richtung der zweiten Station (16) durchquert.

8. Vorrichtung (100) nach einem der vorhergehenden Ansprüche, **dadurch gekennzeichnet, dass** das Kabel (20) vollständig spiralförmig in dem Gehäuse (22) auf wenigstens zehn Windungen aufgewickelt ist und eine Aufwickellänge von höchstens gleich 5 Meter aufweist.

9. Vorrichtung (100) nach den Ansprüchen 2, 7 und 8, **dadurch gekennzeichnet, dass** das zweite Kabelende des Drehverbinders (10) mit dem Ende der Hauptleitung (18) verbunden ist, und dass die Anpassungsimpedanz (24) mit dem ersten Ende des Kabels (20) verbunden ist.

10. Vorrichtung (100) nach Anspruch 7, **dadurch gekennzeichnet, dass** das Kabel (20) ausgehend von seinem ersten Abschnitt (20a) spiralförmig aufgewickelt ist, radial von der Achse (Z) zum Äußeren des Gehäuses (22) in einer ersten Richtung, wobei das Kabel (20) die Aufwickelrichtung ändert, bis zu seinem zweiten Abschnitt (20b) der am Rand des Gehäuses austritt.

11. Vorrichtung (100) nach den Ansprüchen 2 und 10, **dadurch gekennzeichnet, dass** das zweite Ende des Kabels (20) des Drehverbinders mit einer der sekundären Leitungen (19) verbunden ist.

12. Vorrichtung (100) nach einem der vorhergehenden Ansprüche, **dadurch gekennzeichnet, dass** die Anpassungsimpedanz (24) und die charakteristische Impedanz des Paars von Leitern (28, 30) zwischen 40 und 260 Ohm, vorzugsweise zwischen 80 und 160 Ohm, betragen, jeweils beide Werte eingeschlossen.

13. Verwendung einer Vorrichtung (100) nach einem der Ansprüche 1 bis 12, in einem Kraftfahrzeug, wobei die zweite Station (16) gebildet ist aus einem Multiplexkabelbaum, der eine Hauptübertragungsleitung (18) und wenigstens eine sekundäre Übertragungsleitung aufweist, die die Hauptleitung (18) mit wenigstens einem der elektrischen Elemente verbindet, wobei das bewegliche Element (14) ein Lenkrad ist, das mit einer Lenksäule verbunden ist, und die erste Station (12) ein Steuerungsmodul aufweist, das mit wenigstens einem elektrischen Schalter verbunden ist.

14. Verwendung eines flachen elastischen Kabels (20), das eine Hülle (26) und wenigstens zwei Leiter (28, 30, 32, 34, 36, 38) aufweist, wobei wenigstens ein Paar (28, 30) von parallelen Leitern, das hinsichtlich charakteristischer Impedanz geeignet ist, in einer Vorrichtung (100), die die Übertragung von Kontroll-/Steuerungssignalen zwischen einer ersten Station (12), die mit einem hinsichtlich Rotation um eine Achse (Z) beweglichen Element (14) verbunden ist, und einer zweiten, statischen Station (16) erlaubt, wobei jede Station (12, 16) mit verschiedenen elektrischen Steuerungselementen (a, b, ..., x) und/oder elektrischen Empfängerelementen (A, B, ..., X) verbunden ist, wobei mit jedem elektrischen Steuerungselement wenigstens ein Empfängerelement (A, B, ...X) verbunden ist, das geeignet ist, durch das von dem elektrischen Steuerungselement abgegebene Signal aktiviert zu werden, **dadurch gekennzeichnet, dass** sowohl die erste als auch die zweite Station (12, 16) in Richtung der anderen Station wenigstens ein schnelles Signal von numerischen Daten mit einem Volumen größer als 100 kbit/s liefert, dass die Vorrichtung (100) einen Drehverbinder (10) aufweist, der mit einem Kabel (20) ausgestattet ist, das in dem Gehäuse wenigstens teilweise um die Achse (Z) aufgerollt ist, und ein mit der ersten Station (12) verbundenes erstes Ende und ein mit der zweiten Station (16) verbundenes zweites Ende aufweist, um die Übertragung von Signalen zwischen jedem Steuerungselement und dem entsprechenden Empfängerelement zu gewährleisten, dass die Anzahl von Leitern kleiner ist als die Anzahl von Steuerungselementen (a, b, ...,x) und das Material und die Geometrie der Hülle (26) und des Paares von Leitern (20, 30) so ausgewählt ist, dass das Leiterpaar (28, 30) eine konstante charakteristische Impedanz auf der gesamten Kabellänge (20) aufweist und im Wert im Wesentlichen gleich demjenigen der angepassten Anpassungsimpedanz (24) ist, um die schnelle Übertragung der numerischen Daten zu ermöglichen, dass die Hülle (26) durch zwei Flächen (26a, 26b) begrenzt ist, die im Wesentlichen parallel zur Achse (Z) verlaufen und durch zwei Längsränder (26c, 26d) begrenzt sind, die jeweils eine Schmalseite des Kabels (20) bilden, und dass die Schmalseite eine Breite aufweist, die der Dicke des Kabels (20), höchstens gleich 1 mm, entspricht, dass die Leiter (28, 30, 32, 34, 36, 38) flach sind und zwei Schmalseiten mit einer konstanten Dicke aufweisen und mit den Schmalseiten der Hülle (26) ausgerichtet sind, und dass jeder Leiter des Paars (28, 30) vom anderen Leiter des Paars in einem im Wesentlichen auf der gesamten Länge des Kabels (20) konstanten Abstand getrennt ist, und dass die Schmalseite jedes Leiters eine Breite aufweist, die der Dicke des Leiters, höchstens gleich 0,3 mm, entspricht.
